# DEMANDE DE BREVET EUROPEEN

(11) **EP 0 596 873 A2**
(43) Date de publication de la demande: **11.05.1994**
(21) Numéro de dépôt: 94400205.4
(22) Date de dépôt: 08.06.1990
(51) Int. Cl.: F16C 19/52, G01P 3/44

(54) **Roulement ou palier équipé d'un dispositif détecteur de vitesse**

(30) Priorité: 16.10.1989 US 422218
(62) Demande divisionnaire de: 90401565.8
(71) Demandeur: S.N.R. ROULEMENTS, F-74010 Annecy Cédex (FR)
(72) Inventeur: Faye, Bradley D., Norfolk, CT 06058 (US); Hilby, James A., Watertown, CT 06795 (US); Hajzler, Christian, F-74000 Annecy (FR); Alff, Denis, F-74000 Annecy (FR)
(74) Mandataire: Ernst-Schonberg, Michel

(57) **Abrégé**

Roulement ou palier antifriction équipé d'un dispositif détecteur de vitesse et destiné au montage sur un arbre tournant dans lequel :
- une bague extérieure (620, 820, 922) fixe par rapport à l'arbre qui porte un perçage radial de montage d'un capteur (650, 850, 950),
- une bague intérieure (30) formée par un premier élément (32) porteur d'une première piste de roulement (42) intérieure et par un deuxième élément (34) constitué notamment par une première et une deuxième partie (35, 37), un épaulement (36) à la jonction desdites parties axiales (35, 36) et une deuxième piste de roulement (44) intérieure sur l'une des parties (37) axiales, et dans lequel la deuxième partie (37) axiale porte un codeur (60), caractérisé par le fait que le capteur est fixé radialement par un moyen de fixation (859, 957).

## Description

La présente invention concerne un roulement ou palier antifriction à deux rangées de corps roulants équipe d'un dispositif détecteur de vitesse qui délivre un signal de sortie selon le préambule de la revendication. L'invention concerne plus particulièrement un moyen capteur de vitesse pour roulements antifriction montés sur un arbre tournant dont on peut régler la vitesse par l'intermédiaire d'un système d'asservissement en utilisant un signal de vitesse comme entrée de base de ce système. La présente invention trouve son application, tout particulièrement, sur un roulement de roue de véhicule automobile, pour délivrer un signal de vitesse, par exemple à un système antiblocage des freins ou à un système antipatinage des roues du véhicule.

L'industrie automobile exige que dans ces roulements, le capteur de vitesse, le codeur correspondant et tous les éléments de roulement soient protégés de l'environnement, par exemple de l'eau, de la poussière et des débris du revêtement routier. Un des moyens consiste à placer le codeur entre deux rangées de corps roulants, puis à positionner le capteur de manière à ce qu'il soit centré sur le codeur.

La publication US-A 4.865.468 décrit un roulement et palier conforme au préambule de la revendication.

Le roulement est équipé d'un codeur placé dans un espace annulaire délimité entre deux rangées de corps roulants tandisque le capteur est introduit dans un perçage traversant la bague extérieure du roulement.

Un problème lié à l'état de la technique réside en ce que le codeur doit souvent supporter des contraintes axiales. On doit donc le réaliser en un matériau résistant, capable de supporter ces efforts.

L'invention se propose de réduire le coût global d'un roulement en utilisant un codeur en matériau plus tendre, par exemple une bague en résine synthétique chargée de particules magnétiques.

Selon les caractéristiques des revendications il est possible d'utiliser des codeurs dont les formes et localisations contribuent à l'emploi de matériaux plus économiques. Elles permettent également d'améliorer la position du capteur dans la bague extérieure du roulement.

Le mode de fixation du capteur permet, en outre, une dépose facile de celui-ci en cas de réparation ou de remplacement.

Pour mieux comprendre la présente invention, on se reportera aux dessins et à la description détaillée ci-après :
- La figure 1 est une vue en coupe partielle du roulement conforme à l'invention illustrant une fixation vissée du capteur sur la bague extérieure du roulement,
- La figure 2 est une vue en coupe partielle d'un roulement illustrant une autre variante de montage du capteur,
- La figure 3 est une vue en perspective du capteur et du dispositif de montage illustré sur la figure 2,
- Les figures 4 et 5 sont des vues en coupe partielles d'un roulement comportant un autre mode d'immobilisation modifié du capteur, faisant appel à un perçage traversant la bague extérieure,

Les organes communs aux roulements représentés aux différentes figures sont repérés par les mêmes références. Par ailleurs, le terme "capteur" désigne plus généralement tout système de détection incorporant un ensemble capteur sans distinction de nombre.

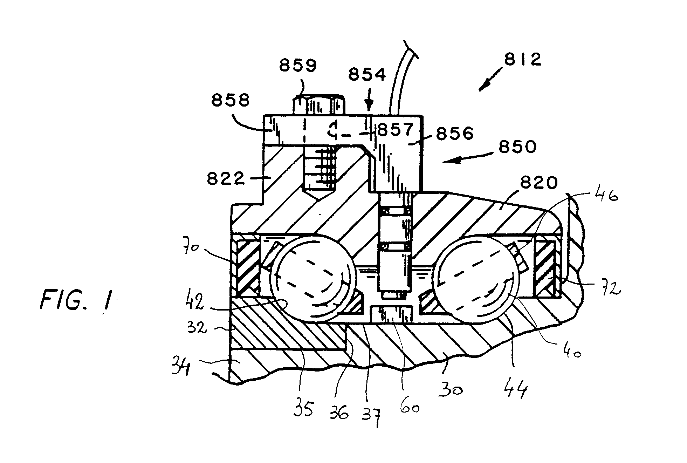

Le roulement 812, illustré sur la figure 1, possède une bague extérieure 820, fixe par rapport à un arbre tournant non illustré sur lequel est monté le roulement, une bague intérieure 30 montée sur l'arbre tournant et pouvant donc tourner par rapport à la bague extérieure 820, deux rangées annulaires de corps roulants 40, un capteur 850, un codeur 60, deux joints d'étanchéité 70 et 72 et un séparateur ou cage 46 pour chaque rangée de corps roulants 40. La bague intérieure 30 est constituée d'un premier élément 32 et d'un second élément 34. Cette structure double facilite la mise en place des billes 40 entre les bagues 820 et 30. Le premier élément 32 comporte une première piste intérieure 42 sur sa surface extérieure. Le second élément 34 comporte une première partie axiale 35, une seconde partie axiale 37, un premier épaulement 36, constitué à la jonction des parties axiales 35 et 37, et une seconde piste intérieure 44 à la surface extérieure de la partie axiale 37.

Le codeur 60 est emmanché à force sur la seconde partie axiale 37 de la bague intérieure 30. Le roulement 812 porte un capteur 850 muni d'une tête en L 854, constituée d'une aile radiale 856 et d'une aile axiale 858. Un orifice radial 857 au travers de la aile axiale 858 est dimensionné de manière à pouvoir recevoir un élément d'assemblage 859, une vis par exemple, fixant la tête 854 à la bague extérieure 820. Dans cet exemple la vis 859 est fixée à un bossage 822 dépassant radialement de la bague extérieure 820. On pourra, cependant, fixer l'aile radiale 856 à toute partie appropriée de la bague extérieure. Les joints 70 et 72 protègent le codeur 60, le capteur 850 et les corps roulants 40 de l'environnement et permettent, le cas échéant, de maintenir de la graisse près des corps roulants.

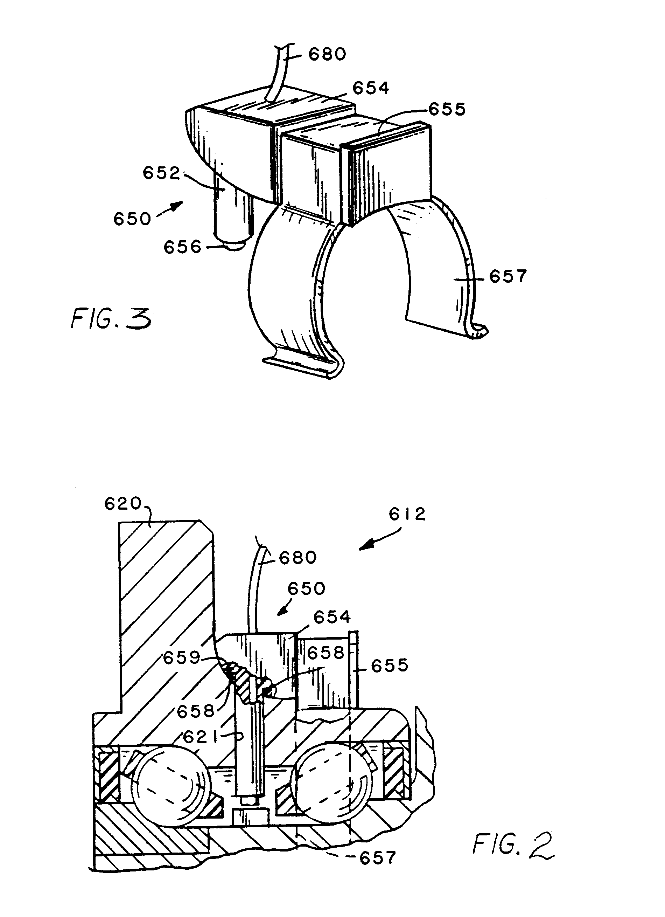

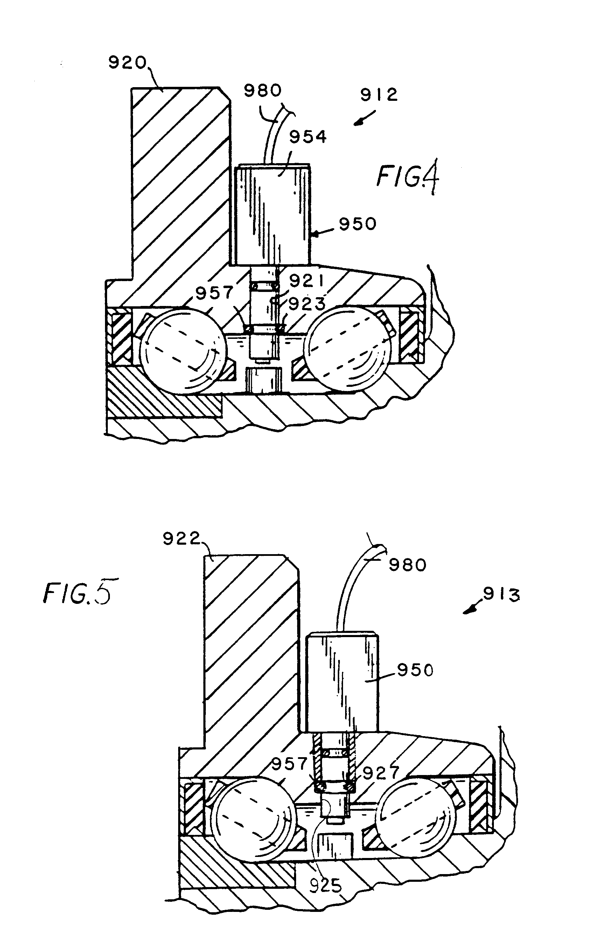

Les figures 2 et 3 illustrent un roulement 612 semblable au roulement de la figure 1.

Le roulement 612 exploite une variante de montage du capteur sur la bague extérieure. Le capteur 650, introduit dans un perçage radial 621, est constitué par un corps 652, d'une tête 654 et d'un détecteur 656. La tête 654 se prolonge axialement par une face d'appui 655 qui reçoit un collier ouvert 657 de blocage en serrant la surface extérieure de la bague extérieure 620. Comme on le voit mieux sur la figure 2, la tête 654 comporte une surface inférieure convexe qui s'adapte parfaitement à la surface de la bague extérieure 620 et permettant ainsi un ajustement parfait de la tête 654 à la bague. Un joint torique 658 placé autour de l'extrémité extérieure du perçage 621, est calé dans une rainure annulaire 659 de la face inférieure de la tête 654, pour protéger le capteur, le codeur et les corps roulants de l'environnement.

Les roulements 912 et 913 des figures 4 et 5 se différencient par le calage du joint torique intérieur 957 de fixation du capteur 950 dans un contre-perçage 923 ou 927 du perçage radial 921 de la bague 920 ou de la bague 922 Sur la figure 4, le contre-perçage 923 est situé à l'extrémité la plus intérieure du perçage 921 et sur la figure 5 à l'intérieur de la bague extérieure 922, entre l'extrémité la plus intérieure et l'extrémité la plus extérieure du perçage radial 925. Le joint torique intérieur 957 a pour fonction de maintenir le capteur 950 dans le perçage de la bague extérieure.

## Revendications

1. Roulement ou palier antifriction équipé d'un dispositif détecteur de vitesse et destiné au montage sur un arbre tournant dans lequel :
- une bague extérieure (620, 820, 922) fixe par rapport à l'arbre qui porte un perçage radial de montage d'un capteur (650, 850, 950),
- une bague intérieure (30) formée par un premier élément (32) porteur d'une première piste de roulement (42) intérieure et par un deuxième élément (34) constitué notamment par une première et une deuxième partie (35, 37), un épaulement (36) à la jonction desdites parties axiales (35, 36) et une deuxième piste de roulement (44) intérieure sur l'une des parties (37) axiales, et dans lequel la deuxième partie (37) axiale porte un codeur (60), caractérisé par le fait que le capteur est fixé radialement par un moyen de fixation (859, 957).

2. Roulement selon la revendication 1, caractérisé par le fait que le capteur (650) introduit dans le perçage radial (621) de la bague extérieure (620) est maintenu par un organe de blocage (657) qui enserre la surface externe de ladite bague (620) et possède une face d'appui (655) dudit organe de blocage.

3. Roulement selon la revendication 1, caractérisé par le fait que le capteur (850) possède une tête (854) en L dont une aile axiale (858) est traversée par un orifice (857) de réception d'un élément de fixation (859) de ladite tête à la bague extérieure (820).

4. Roulement selon la revendication 1, caractérisé par le fait que le moyen de fixation du capteur (950) est constitué par au moins un joint torique (957) maintenu serré sur le corps du capteur et monté à force dans un contre-perçage (923, 927) du perçage (921, 925) de réception dudit capteur.

5. Roulement selon la revendication 4, caractérisé par le fait que le contre-perçage (923) débouche à l'intérieur de la bague intérieure (920).

6. Roulement selon la revendication 5, caractérisé par le fait que le contre-perçage (927) débouche dans le perçage (925) de montage du capteur (950) entre les extrémités radiales dudit perçage.
